# EUROPEAN PATENT SPECIFICATION

(11) **EP 2 740 716 B1**
(45) Date of publication and mention of the grant of the patent: **21.01.2015**
(21) Application number: 13460078.2
(22) Date of filing: 26.11.2013
(51) Int. Cl.: C04B 35/00, C08J 5/12, C08J 5/18, C08G 77/04, C08L 83/04

(54) **Application of hybrid systems MgO-SiO2 / multiwalled olygomeric silsesquioxanes as promoters of ceramization in silicone composites for covers of electrical cables**
Verwendung von Hybridsystemen aus MgO-SiO2/mehrwandigen oligomeren Silsesquioxanen als Promotoren der Keramisierung in Silikonverbundstoffen für Hüllen elektrischer Kabel
Application de systèmes hybrides MgO-SiO2 à silsesquioxanes oligomèriques à plusieurs parois en tant que promoteurs de céramisation dans des composites en silicone pour protections de câbles électriques

(30) Priority: 29.11.2012 PL 40181012
(43) Date of publication of application: 11.06.2014
(73) Proprietor: Politechnika Lodzka, 90-924 Lodz (PL); AKADEMIA GORNICZO-HUTNICZA im. Stanislawa Staszica, 30-059 Krakow (PL); Instytut Inzynierii Materialow Polimerowych i Barwnikow, 87-100 Torun (PL)
(72) Inventor: Dul, Jan, 05-820 Piastów (PL); Parys, Grzegorz, 05-820 Piastów (PL); Zbigniew, Pedzich, 30-619 Kraków (PL); Bielinski, Dariusz, 95-100 Zgierz (PL); Jesionowski, Teofil, 61-131 Poznan (PL); Damian, Ambroziewicz, 61-656 Poznan (PL)

(56) References cited:
- DAMIAN AMBROZEWICZ ET AL: "New POSS/magnesium silicate nano-hybrids obtained by chemical or mechanical methods", CHEMICAL ENGINEERING JOURNAL, vol. 210, 30 August 2012 (2012-08-30), pages 229-236, XP055113413, ISSN: 1385-8947, DOI: 10.1016/j.cej.2012.08.075

## Description

The subject of invention is use of the hybrid system MgO•SiO₂ / multiwalled olygomeric silsesquioxane as promoter of ceramization in silicone composites destined for covers of electrical cables.

Application of silicone composites containing inorganic particles, undergoing ceramization on fire, is commonly known in the cable industry. It is aimed to produce fire resistant electrical cables, which are able to provide electricity supply to electrical circuits and receivers during fire. They can find use in buildings or other objects of higher fire requirements therefore ensure increased safety during fire.

Such composites are made of silicone elastomers filled with pyrogenic silica. They are able to thermal vulcanization under the influence of organic peroxides, antypirenes and metallic or mineral compounds being ceramically active at high temperature.

Promoters and activators of ceramization process are very important components of ceramizable silicone composites, responsible for initiation and support of ceramic skeleton formation, which preserves cable cover from destruction during fire. With increasing temperature, organic parts of polymer phase degrade and ceramically active components of mineral phase are not able to assure expected mechanical strength of the material only by adhesion forces.

Activity of promoters and precursors plays also an important role in the rate of ceramic layer formation of the cable cover. According to actual state-of-the art it should meet expected mechanical properties at the temperature of 900 - 1100°C and no later than after 60 s.

The high rate of ceramization of the composite material makes thereby the outer, formed under high temperature, ceramic layer of cable cover, very effective in thermal insulation. It positively affects the sustainability of the physical properties of the cover and formation of ceramic layer of advantageous mechanical properties, what results in prolonged functionality of electrical cables on fire or the action of high temperature.

Application of fine particles silica as a precursor of ceramization is known from the publication "Ceramic - modified elastomers", published in Current Opinion in Solid State and Materials Science 1999, vol. 4, pp. 565 - 570, by J.E. Mark. However, use of silica nanoparticles brings about some technical limitations associated with high cost of their production and problems of dispersion in non-polar silicone polymer phase.

Able to oxidation compounds of magnesium, chemically reacting at high temperature with silica and/or aluminum compounds and producing such minerals as forsterite (Mg₂SiO₄), magnesium silicate (MgSiO₃), cordierite (2Mg•2Al₂O₃•5SiO₂), spinel (MgAl₂O₄), which are the components of the ceramic outer layer formed, are known from the patent declaration US 2009/0099289. Important drawback of the above solution concerns the fact, that magnesium oxide, produced in high temperature oxidation of magnesium compounds, should quantitatively react up with silica and/or other components of mineral phase. Otherwise, the unreacted magnesium oxide left can adversely affect electrical insulation properties of cable cover.

The above problem does not occur if, products of hydrolysis of phenyltrichlorosilane (C₆H₅SiCl₃) and methyltrichlorosilane (CH₃SiCl₃), synthesized by known methods - described in the patent declaration P-397997, are used as precursor of ceramization.

In the patent declaration P-397998, another precursor of ceramization, namely tetraethoxysilane adsorbed on the surface of diatomite powder, has been presented. At the temperature of 120±10°C, under the influence of water contained in diatomite powder, rapid hydrolytic destruction of tetraethoxysilane occurs, resulting in highly reactive nanosilica particles formation on the surface of diatomite particles. Simultaneously an excess of moisture and ethanol, produced in the hydrolysis reaction, is evaporating.

Hybrid systems composed of silicate base and from 0.1 to 50 weight parts, preferably 10 weight parts, of silsesquioxanes containing R₁ - R₈, where R₁ to R₈ is alkyl- group and/or groups, or alkoxy-, or methacryloxy-, or glycidoxy-, or amino-, or vinyl-, or perfluoro- or their mixture, are known from the Polish patent declaration P-394903. They are synthesized by chemical functionalization of the filler surface with alkoxysilanes, followed by mechanical and chemical modification.

The essence of the invention is use of the hybrid system Mg0•SiO₂/multiwalled olygomeric silsesquioxane, as promoter of ceramization in the silicone composites destined for covers of electrical cables, containing per 100 weight parts of magnesium silicate from 0.1 to 50 weight parts, favourably 10 weight parts of the silsesquioxane as modifier containing R₁ - R₈, where R₁ to R₈ is alkyl- group and/or groups, or alkoxy-, or methacryloxy-, or glycidoxy-, or amino-, or aminophenyl-, or phenyl-, or vinyl-, or perfluoro- or their mixture.

Use of the above mentioned hybrid system makes possible to obtain a composite mix of high susceptibility to ceramization, which is able to produce well developed ceramic layer, effectively protecting metal wire of electrical cable from heat transfer and possible melting during fire.

### Example no. 1

40 weight parts of pyrogenic silica, having the specific surface area of 200 m²/g and platinum catalyst in the form of platinum(0)-1,3-divinyl-1,1,3,3-tetramethyldisiloxane are admixed to 100 weight parts of dimethyl-vinyl siliconeof average molecular weight M_{w}= 680 000 and vinyl group content of 0.07 %, at 140°C. The amount of platinum catalyst added assured platinum content in the elastomer equal to 50 ppm. Silica filled polymer phase is then cooled down to temperature 110°C, and 45 weight parts of quartz powder, 5 weight parts of wollastonite, 2 weight parts of titanium dioxide and 5 weight parts of the hybrid system MgO•SiO₂/multiwalled olygomeric silsesquioxane, containing 10 weight parts of silsesquioxane octa-substituted with methacrylo- groups on 100 weight parts of magnesium silicate filler, are admixed.

Prepared in this way silicone composite, subjected to curing with 1.5 weight % of bis(2,4-dichlorobenzoyl) peroxide during 15 minutes at 120 °C, exhibits the properties listed below:

| | Results | Requirements of cable industry |
|---|---|---|
| Tensile strength [MPa] | 7.7 | min. 5.0 |
| Elongation at break [%] | 247 | min. 150 |
| Tear strength [kN/m] | 16 | min. 12 |
| Hardness [°Sh A] | 64 | 70±5 |
| Time to ceramization of cured composite under the flame from gas burner at 1050 °C [s] | below 60 | |

### Example no. 2

40 weight parts of pyrogenic silica, having the specific surface area of 200 m²/g and platinum catalyst in the form of platinum(0)-1,3-divinyl-1,1,3,3-tetramethyldisiloxane are admixed to 100 weight parts of dimethyl-vinyl silicone of average molecular weight M_{w}= 680 000 and vinyl group content of 0.12 %, at 140°C. The amount of platinum catalyst added assured platinum content in the elastomer equal to 50 ppm. Silica filled polymer phase is then cooled down to temperature 80°C, and 35 weight parts of potassium mica, 10 weight parts of aluminum hydroxide, 3 weight parts of magnesium hydroxide, 2 weight parts of titanium dioxide and 8 weight parts of the hybrid system MgO•SiO₂/multiwalled olygomeric silsesquioxane, containing 20 weight parts of silsesquioxane octa-substituted with methacrylo- groups on 100 weight parts of magnesium silicate filler, are admixed.

Prepared in this way silicone composite, subjected to curing with 1.5 weight % of bis(2,4-dichlorobenzoyl)peroxide during 15 minutes at 120 °C, exhibits the properties listed below:

| | Results | Requirements of cable industry |
|---|---|---|
| Tensile strength [MPa] | 6.1 | min. 5.0 |
| Elongation at break [%] | 207 | min. 150 |
| Tear strength [kN/m] | 18 | min. 12 |
| Hardness [°Sh A] | 73 | 70±5 |
| Time to ceramization of cured composite under the flame from gas burner at 1050 °C [s] | below 60 | |

## Claims

1. Use of the hybrid system MgO•SiO₂/multiwalled olygomeric silsesquioxane, as promoter of ceramization in the silicone composites destined for covers of electrical cables, containing per 100 weight parts of magnesium silicate from 0.1 to 50 weight parts, favourably 10 weight parts of the silsesquioxane as modifier containing R₁ - R₈, where R₁ to R₈ is alkyl- group and/or groups, or alkoxy-, or methacryloxy-, or glycidoxy-, or amino-, or aminophenyl-, or phenyl-, or vinyl-, or perfluoro- or their mixture.

## Patentansprüche

1. Anwendung von Hybridsystemen aus MgO-SiO2/vielflßchigen, oligomerischen Silsesquioxanen als Promotoren der Keramisierung von Silikonverbundstoffen fiir Hüllen elektrischer Kabel **dadurch gekennzeichnet, dass** der 100 Massenteile des Magnesiumsilikates enthaltenden Grundmischung von 0,1 bis 50 Massenteilen, forteilhaft 10 Massenteile, des Silesquionoxides die R₁ - R₈ enthaltenden Gruppen, wobei R₁ bis R₈ eine Alkylgruppe Und/oder Alkoxy-, Methakryloxy-, oder Glycidoxy-, oder Amino-, oder Aminophenyl-, oder Phenyl-, oder Vinyl-, oder Perfluorogruppe, oder ihre Mischung ist, zugemischt werden.

## Revendications

1. Utilisation du système hybride MgO • SiO2 / multiparois silsesquioxane olygomerique, en tant que promoteur de céramisation dans les composites à base de silicone destinés à la protection des câbles électriques, contenant pour 100 parties en poids de silicate de magnésium de 0,1 à 50 parties en poids, favorablement 10 parties en poids de le silsesquioxane contenant comme modificateur R1 - R8, dans laquelle R1 - R8 est un groupe alkyle et / ou groupes, ou alcoxy, ou méthacryloxy, ou glycidoxy-, ou amino, ou aminophenyl-, ou phényl-, ou vinyl-, ou perfluoro- ou leur mélange.
